# EUROPEAN PATENT APPLICATION

(11) **EP 2 982 467 A1**
(43) Date of publication of application: **10.02.2016**
(21) Application number: 15180217.0
(22) Date of filing: 07.08.2015
(51) Int. Cl.: B23D 47/04, B27B 31/00, B27B 5/065

(54) **MACHINE FOR CUTTING WOOD PANELS OR THE LIKE**

(30) Priority: 07.08.2014 IT BO20140450
(71) Applicant: BIESSE S.p.A., 61100 Pesaro (IT)
(72) Inventor: LATTANZI, Lorenzo, 61100 PESARO (IT)
(74) Representative: Manconi, Stefano

(57) **Abstract**

A machine to cut wood panels (2) or the like is provided with a main pusher (21), mobile along two longitudinal guide members (8a, 8b), with two motor drives (26) interposed between the main pusher (21) and the two longitudinal guide members (8a, 8b), with a secondary pusher (22), and with a cutting unit (16) to cut the panel (2) transversely to an advancement direction (4) of the main pusher (21) and of the secondary pusher (22).

## Description

The present invention relates to a machine to cut wood panels or the like.

In the field of the cutting of wood panels, it is known to provide a machine comprising a base defining a substantially horizontal supporting plane for at least one wood panel or the like; a cutting station; a main pusher for moving at least one panel through the cutting station in a first direction; a secondary pusher for moving at least one panel through the cutting station in the first direction; and a cutting unit mounted in the cutting station and mobile along a cutting line parallel to a second direction transverse to the first direction to cut the panels.

The cutting line is usually limited by two substantially vertical uprights, and therefore has a measured width, parallel to the second direction, defining the width of a useful area of the supporting plane.

Generally, the main pusher includes two longitudinal guide members parallel to the first direction, a first carriage extending between the two longitudinal guide members parallel to the second direction, a plurality of first holding members mounted on the first carriage to receive and hold the panel, and a first actuating device to move the first carriage along the two longitudinal guide members in the first direction.

The first holding members are arranged to hold the panel at its end face which is parallel to the second direction.

The secondary pusher usually comprises a second carriage coupled with one of the longitudinal guide members, at least a second holding member mounted on the second carriage to receive and hold the panel, and a second actuating device to move the second carriage along the respective longitudinal guide member in the first direction.

The second holding members are arranged to hold the panel at its end face which is parallel to the second direction. The first actuating device, namely the actuating device of the main pusher, generally comprises a central electric motor mounted at an intermediate point of the first carriage, and a drive shaft which extends along the first carriage parallel to the second direction and is set in rotation by the electric motor.

The drive shaft is provided with two end pinions, each of them being coupled with a rack fixed to the relative longitudinal guide member parallel to the first direction. The machine further comprises an electronic control unit for selectively moving the main pusher and the secondary pusher with respective laws of motion independent of one another, or with respective laws of motion identical to each other.

When the two longitudinal guide members are arranged outside the useful area of the supporting plane, the first carriage has a width substantially equal to the width of the cutting line, whereas when one of the longitudinal guide members projects inside the useful area of the supporting plane, the first carriage has a width smaller than the width of the cutting line.

Since in both cases the first carriage, and therefore the drive shaft of the main pusher are relatively long, the known panel cutting machines of the aforesaid type have some drawbacks mainly deriving from the fact that the actuating device with a central motor is incapable of ensuring a correct and precise advancement of the main pusher in the first direction and that, consequently, the two ends of the drive shaft and, therefore, of the first carriage, can advance with respective different laws of motion in the first direction.

The aforesaid drawback is particularly relevant when the panel must be advanced through the cutting station simultaneously with both the main pusher and the secondary pusher.

In this case, the main pusher and the secondary pusher must be connected by means of a mechanical locking device which, however, has a relatively reduced reliability and precision.

The object of the present invention is to provide a machine to cut wood panels or the like which is free from the foresaid drawbacks and which is simple and cheap to implement.

The present invention provides a machine to cut wood panels or the like as claimed in the appended claims.

The present invention will now be described with reference to the accompanying drawings illustrating a non-limitative embodiment thereof, in which:
Figure 1 is a schematic plan view, with parts removed for clarity's sake, of a preferred embodiment of the machine of the present invention;
Figure 2 is a schematic plan view, with parts removed for clarity's sake, of a first variation of the machine of Figure 1; and
Figure 3 is a schematic plan view, with parts removed for clarity's sake, of a second variation of the machine of Figure 1.

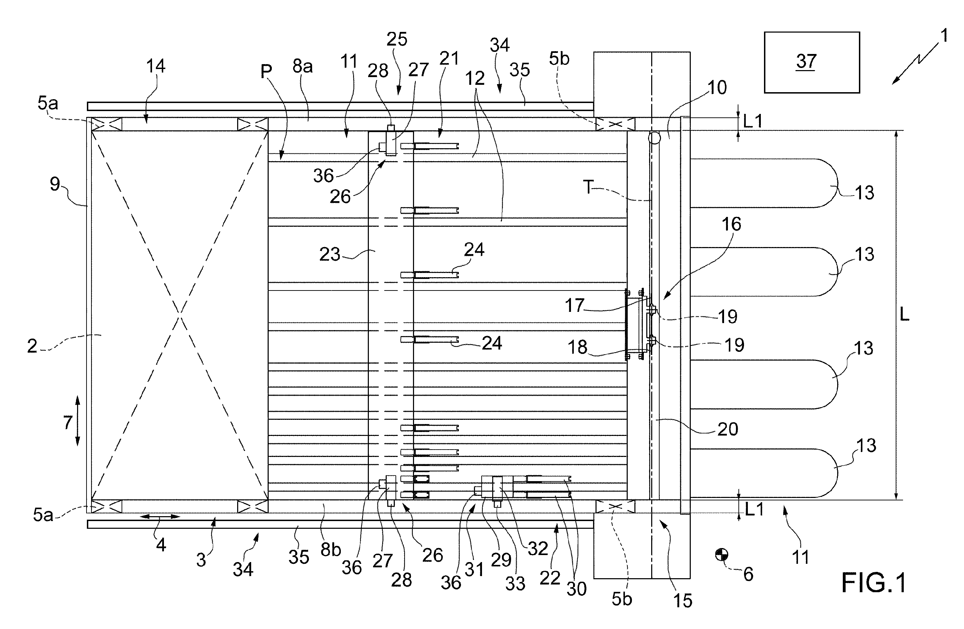

With reference to Figure 1, 1 indicates, as a whole, a machine to cut wood panels 2 or the like (for example plastic materials, or partially wood and partially plastic materials) having a substantially rectangular shape.

The machine 1 comprises a portal frame 3, which substantially has the shape of a parallelepiped with a rectangular base, extends in a horizontal direction 4, and is provided with four vertical edges, each defined by a respective upright 5, parallel to a vertical direction 6 transverse to the direction 4.

The uprights 5 are divided into a pair of uprights 5a and a pair of uprights 5b, and the uprights 5a, 5b of each pair of uprights 5a, 5b are mutually aligned in a horizontal direction 7, orthogonal to the directions 4 and 6.

The uprights 5a, 5b define a working area having a form that, at the uprights 5b, has a width L equal to the distance between the uprights 5b, measured parallel to the direction 7.

The two uprights 5a are connected to the corresponding uprights 5b by means of respective longitudinal guide members 8a, 8b fixed to the upper ends of the relative uprights 5a, 5b parallel to the direction 4, and are connected together by a cross member 9 parallel to the direction 7. A cross member 10 parallel to the direction 7 connects the two uprights 5b.

Each longitudinal member 8a, 8b extends outside the working area, and has a width L1, measured parallel to the direction 7, substantially equal to a width of the corresponding uprights 5a, 5b also measured parallel to the direction 7.

The frame 3 also comprises two supporting devices 11, which are arranged on opposite sides of the cross member 10 in the direction 4, and define, together with the upper face of the cross member 10, a substantially horizontal supporting plane P for the panels 2.

The one of the two devices 11 comprises a plurality of roller bars 12, parallel to each other and to the direction 4, whereas the other comprises four outlet tables 13, parallel to each other and to the direction 4.

The bars 12 extend between the cross member 10 and a station 14 for loading the panels 2 on the plane P. The station 14 is formed inside the frame 3, extends between the uprights 5a starting from the cross member 9 and is configured to receive a stack of panels 2.

The machine 1 also comprises a cutting station 15, which is formed at the cross member 10 and the uprights 5b, and is provided with a cutting unit 16 coupled in known manner with the cross member 10 to perform, with respect to the frame 3 and under the thrust of a known, not shown actuating device, rectilinear movements in the direction 7. The cutting unit 16 has a blade 17 and an engraver 18 mounted to rotate about respective longitudinal axes 19 parallel to each other and to the direction 4 and to perform rectilinear movements in the direction 6 between relative lowered rest positions, in which the blade 17 and the engraver 18 are arranged below the plane P to allow the advancement of the panels 2 along the plane P, and raised operating positions, in which the blade 17 and the engraver 18 protrude through the cross member 10 above the plane P to cut the panels 2.

The blade 17 and the engraver 18 are also moved by the unit 16 in the direction 7 with a rectilinear reciprocating motion comprising a forward stroke, wherein the engraver 18, arranged before the blade 17 in the advancing direction 7 of the unit 16, engraves the panel 2 arranged on the plane P and the blade 18 cuts the panels 2, and a return stroke.

To this regard, it should be specified that the group 16 is moved in the direction 7 along a cutting line T having a width equal to the width L of the working area.

The unit 16 cooperates with a pressing device 20 of known type, which extends above the plane P in the direction 7, and is mobile, with respect to the frame 3, in the direction 6 between a raised rest position and a lowered operating position, wherein the panels 2 are locked on the plane P and are cut by the unit 16 parallel to the direction 7.

The machine 1 further comprises a main pusher 21 and a secondary pusher 22 configured to advance the panels 2 along the plane P and through the station 15 either way up of the direction 4.

The pusher 21 comprises a motor-driven carriage 23, which is mounted above the bars 12, extends between the two longitudinal members 8a, 8b in the direction 7, and therefore has a width substantially equal to the width L of the aforementioned working area.

The carriage 23 supports a plurality of holding members 24, which are distributed along the carriage 23 in the direction 7, and are mobile along the carriage 23 in the direction 7.

Each member 24 is also mobile between a raised rest position and a lowered operating position, and comprises, in this case, a lower jaw and an upper jaw, mutually mobile between a clamping position and a release position of at least one panel 2.

The carriage 23 is moved along the longitudinal members 8a, 8b in the direction 4 by an actuating device 25 comprising two distinct motor drives 26, each of which is interposed between a respective free end of the carriage 23 and the corresponding longitudinal member 8a, 8b.

In the present case, each motor drive 26 comprises an electric motor 27, which is fixed to the carriage 23 parallel to the direction 7, and has an output shaft on which a pinion 28 is keyed which, in turn, is coupled with a rack (not shown) fixed along the respective longitudinal member 8a, 8b parallel to the direction 4.

According to some variations not shown, each motor drive 26 comprises, for example:
a linear motor having a guide fixed along the corresponding longitudinal member 8a, 8b parallel to the direction 4, and
a magnetic cursor fixed to the carriage 23 and coupled with the guide; or
a screw fixed along the corresponding longitudinal member 8a, 8b parallel to the direction 4 and a recirculating ball nut fixed to the carriage 23 and coupled with the screw.

The pusher 22 comprises a motorized carriage 29, which is coupled with the longitudinal member 8b, extends inside the working area having a width L, is mounted above the bars 12, and supports, in this case, a pair of holding members 30 quite similar to the members 24.

Both the members 24 and the members 30 are arranged to hold the relative panels 2 at related side faces parallel to the direction 7.

The carriage 29 is moved along the longitudinal member 8b in the direction 4 by a motor drive 31 interposed between the carriage 29 and the longitudinal member 8b.

In the present case, the motor drive 31 comprises an electric motor 32, which is fixed to the carriage 29 parallel to the direction 7, and has an output shaft on which a pinion 33 is keyed which, in turn, is coupled with a rack (not shown) fixed along the longitudinal member 8b parallel to the direction 4.

The machine 1 also comprises, for each motor drive 26, 31, a respective detection device 34 configured to detect the position of the motor drive 26, 31 in the direction 4. Each device 34 comprises, in this case, a magnetic stripe 35 attached to the frame 3 parallel to the direction 4, and a position sensor 36 mounted on the respective carriage 23, 29 to indicate the position of the respective carriage 23, 29 on the stripe 35.

The motor drives 26, 31 and the detection devices 34 are connected with an electronic control unit 37 configured to selectively control the operation of the main pusher 21 and of the secondary pusher 22.

The control unit 37 is configured to selectively control the two motor drives 26 as a function of the positions detected by the relevant detection devices 34 and to advance said motor drives 26 according to respective identical laws of motion.

According to a first operating mode, the pushers 21, 22 are moved in the direction 4 according to respective different laws of motion so as to advance the respective panels 2 through the cutting station 15 and to allow the cutting unit 16 to cut the panels 2 advanced by the pusher 21 according to a cutting pattern different from the cutting pattern of the panels 2 advanced by the pusher 22.

In this case, the control unit 37 is configured to selectively control the motor drives 26, 31 as a function of the positions detected by the relevant detection devices 34 and to advance the motor drives 26 according to a law of motion different from the motion law of the motor drive 31. According to a further operating mode, the pushers 21, 22 are moved in the direction 4 according to respective identical laws of motion to advance the same panels 2 through the cutting station 15 and to allow the cutting unit 16 to cut the panels 2 according to a single cutting pattern.

In this case, the control unit 37 is configured to selectively control the motor drives 26, 31 as a function of the positions detected by the relevant detection devices 34 and to advance the motor drives 26, 31 according to respective identical laws of motion.

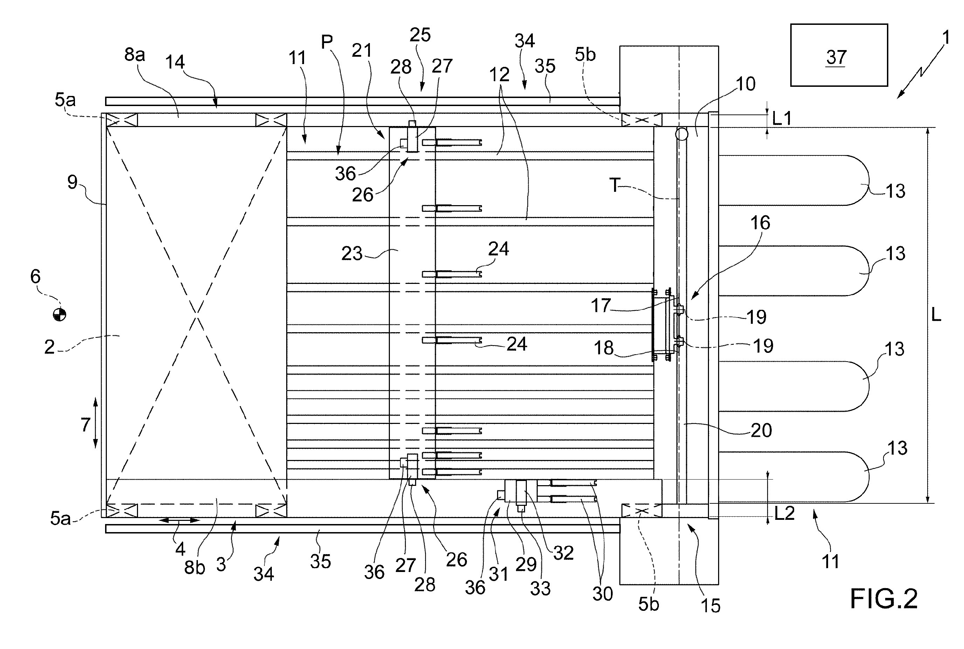

The variant shown in Figure 2 differs from the one of Figure 1 only in that:
the longitudinal member 8b has a width L2 greater than the width L1, and protrudes inside said working area having a width L;
therefore, the carriage 23 has a width smaller than the width L; and
the carriage 29 is mounted below the longitudinal member 8b.

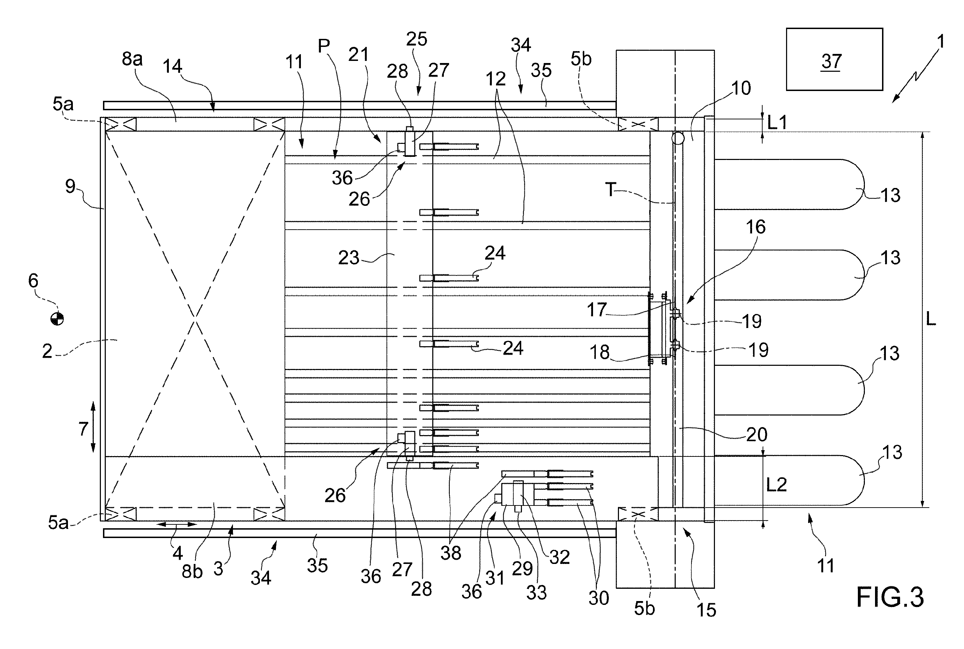

The variant illustrated in Figure 3 differs from the one of Figure 2 only in that the machine 1 comprises at least one auxiliary holding member 38, in this case two members 38, which are mounted below the longitudinal member 8b, are arranged between the two pushers 21, 22 in the direction 7, and are entirely similar to the members 24, 30.

Each member 38 is devoid of motorization, and is selectively attachable to the two pushers 21, 22 in a known manner and not illustrated, in particular by means of a coupling device of the mechanical type.

The presence of the two motor drives 26 guarantees a correct advancement of the carriage 23 in the direction 4, both when the laws of motion of the two pushers 21, 22 in the direction 4 must be identical and when the laws of motion of the two pushers 21, 22 in the direction 4 must be different.

## Claims

1. A machine to cut wood panels (2) or the like, the machine comprising a cutting station (15); a main pusher (21) to move at least one panel (2) through the cutting station (15) in a first direction (4), the main pusher (21) comprising at least two first longitudinal guide members (8a, 8b) parallel to the first direction (4), a first carriage (23) extending between the two first longitudinal guide members (8a, 8b), a plurality of first holding members (24) mounted on the first carriage (23) to receive and hold the panel (2), and a first actuating device (25) to move the first carriage (23) along the two first longitudinal guide members (8a, 8b) in the first direction (4); a secondary pusher (22) to move at least one panel (2) through the cutting station (15) in the first direction (4), the secondary pusher (22) comprising at least a second longitudinal guide member (8a, 8b) parallel to the first direction (4), a second carriage (29), at least a second holding member (30) mounted on the second carriage (29) to receive and hold the panel (2), and a second actuating device (31) to move the second carriage (29) along the second longitudinal guide member (8a, 8b) in the first direction (4); and a cutting unit (16) mounted in the cutting station (15) and mobile along a cutting line (T) which is parallel to a second direction (7) transverse to the first direction (4) to cut the panels (2); and being **characterised in that** the first actuating device (25) comprises at least two first motor drives (26), each of which is interposed between the first carriage (23) and a relative said first longitudinal guide member (8a, 8b).

2. A machine according to claim 1, further comprising an electronic control unit (37) which is configured to move the two first motor drives (26) in the first direction (4) with respective identical laws of motion.

3. A machine according to claim 2, further comprising, for each first motor drive (26), a respective first detection device (34) to detect the position of the first motor drive (26) along the relative first longitudinal guide member (8a, 8b); the electronic control unit (37) being configured to selectively control the two first motor drives (26) as a function of the positions detected by the two first detection devices (34).

4. A machine according to any one of the preceding claims, wherein the second actuating device (31) comprises at least a second motor drive interposed between the second carriage (29) and the second longitudinal guide member (8a, 8b).

5. A machine according to claim 4, further comprising an electronic control unit (37) which is configured to selectively move the second motor drive in the first direction (4) with a law of motion that is identical to, or independent of, a law of motion of the two first motor drives (26) in the first direction (4).

6. A machine according to any one of the preceding claims, further comprising support means (11) defining a supporting plane (P) for at least one panel (2); the supporting plane (P) having an operating area with a width (L) that is equal to the width of the cutting line (T).

7. A machine according to claim 6, wherein the first carriage (23) has a width that, measured in the second direction (7), is substantially equal to the width (L) of the operating area.

8. A machine according to claim 6, wherein the first carriage (23) has a width that, measured in the second direction (7), is smaller than the width (L) of the operating area.

9. A machine according to any one of claims 6-8, wherein the first longitudinal guide members (8a, 8b) are mounted outside the operating area.

10. A machine according to claim 9, wherein the second carriage (29) is coupled with one of the first longitudinal guide members (8a, 8b).

11. A machine according to any one of claims 6-8, wherein one of the two first longitudinal guide members (8a, 8b) is mounted outside the operating area, whereas the other is mounted inside the operating area.

12. A machine according to claim 11, wherein the second carriage (29) is coupled with the first longitudinal guide member (8a, 8b) mounted inside the operating area.

13. A machine according to any one of the preceding claims, wherein the first holding members (24) are mounted on the first carriage (23) to hold the relative panel (2) at its side face which is parallel to the second direction (7).

14. A machine according to any one of the preceding claims, wherein the second holding members (30) are mounted on the second carriage (29) to hold the relative panel (2) at its side face which is parallel to the second direction (7).

15. A machine according to any one of the preceding claims, wherein at least part of the first holding members (24) are mobile along the first carriage (23) in the second direction (7) and/or at least part of the second holding members (30) are mobile along the second carriage (29) in the second direction (7) and/or at least part of the first holding members (24) are mobile between a lowered operating position and a raised rest position and/or at least part of the second holding members (30) are mobile between a lowered operating position and a raised rest position.

16. A machine according to any one of the preceding claims, further comprising at least one third holding member (38) and, for each said third holding member (38), a respective coupling device to selectively couple the third holding member (38) to the main pusher (21) or to the secondary pusher (22).
